# EUROPÄISCHE PATENTANMELDUNG

(11) **EP 0 609 703 A2**
(43) Veröffentlichungstag der Anmeldung: **10.08.1994**
(21) Anmeldenummer: 94100739.5
(22) Anmeldetag: 19.01.1994
(51) Int. Cl.: G11C 8/00

(54) **Monolithisch integrierte Datenspeicheranordnung und Verfahren zu deren Betrieb**

(30) Priorität: 01.02.1993 DE 4302754
(71) Anmelder: SIEMENS AKTIENGESELLSCHAFT, D-80333 München (DE)
(72) Erfinder: Storn, Rainer, Dr., D-85551 Kirchheim (DE)

(57) **Zusammenfassung**

Mit der Erfindung wird eine Speicheranordnung und ein Betriebsverfahren dazu beschrieben, welche eine beschleunigte Tabellensuche ermöglicht.

Dies wird dadurch erreicht,daß der Adreßgenerator, der nach einem Hash-Verfahren arbeitet und der adressierbare Speicher auf einem Chip untergebracht werden. Einen weiteren Vorteil erzielt man,wenn man den Adreßgenerator speicherprogrammierbar macht, sodaß das Hash-Verfahren variabel vorgegeben werden kann. Eine weitere Beschleunigung erzielt man, wenn man ein CRC-Verfahren für die Berechnung der Hash-Adressen einsetzt und Zwischenergebnisse der Polynomdivision in Tabellen abspeichert. Man nutzt so zwei Vorteile: Den Vorteil der Geschwindigkeitsvergrößerung durch die Integration, und den weiteren Vorteil der Geschwindigkeitsvergrößerung durch die beschleunigte Polynomdivision, sowie die dem Hash-Verfahren eigenen hohen Zugriffstrefferquoten.

## Beschreibung

Häufig sind bei Datenverarbeitungsanwendungen Zugriffe auf miteinander verbundene Daten erforderlich. Solche Daten können aufgrund von Betriebserfordernissen der Datenverarbeitungseinrichtung an verschiedenen Stellen im Speicher der Datenverarbeitungsanlage abgelegt sein. Ein Grund für die getrennte Abspeicherung kann in der Menge der abzuspeichernden Daten liegen. Ein häufiger Zugriff auf eine große Menge Daten an einem festen Speicherplatz würde den Betrieb der Datenverarbeitungsanlage verlangsamen. Ein weiterer Grund kann darin bestehen, daß parallel auf unterschiedliche Datensätze zugegriffen werden muß und daß eine ständige Verbindung dieser Datensätze auch eine nachteilige Auswirkung auf die Geschwindigkeit der Datenverarbeitung hätte.

Vielfach handelt es sich bei solchen verbundenen Daten um Tabellen, oder Listen, die aufeinander verweisen. In der Komunikationstechnik und im Bereich der künstlichen Intelligenz werden solche verbundenen Daten oder Listen häufig verwendet. Gerade in diesen Bereichen bedeutet ein schneller Zugriff auf miteinander verbundene Daten auch eine hohe Datenverarbeitungsgeschwindigkeit. Im Bereich der Kommunikationstechnik haben sich für miteinander verbundene Daten, die hierarchisch aufeinander aufbauen auch die Begriffe "Schlüssel" und damit "assoziierter Informationen" etabliert.

Es folgen nun einige Beispiele solcher Schlüssel und damit assoziierter Informationen.
1. Beispiel:

| | |
|---|---|
| Schlüssel: | Name einer Person |
| Assozierte Info: | Adresse, Geburtstag, Telefonnummer, ... |

2. Beispiel:

| | |
|---|---|
| Schlüssel: | Sendeadresse in ein Computernetz |
| Assoziierte Info: | Nummer der dazugehörigen Tabelle, in welcher alle erlaubten Empfangsadressen stehen. |

3. Beispiel:

| | |
|---|---|
| Schlüssel: | Nach CCITT vereinbarte E.164-Adresse |
| Assoziierte Info: | Netzwerktyp des zu der E.164-Adresse gehörigen Computernetzes, erlaubte Adressen, an welche von der aktuellen E.164-Adresse gesendet werden darf, erlaubte Adressen von denen die aktuelle E.164-Adresse Datenpakete empfangen darf, ETC.. |

Für das Auffinden von Informationen, die mit Schlüsseln assoziiert sind, gibt es verschiedene Hardware-und Softwarelösungen. Die Softwarelösungen basieren auf schnellen Suchverfahren (Binärsuche, Hash-Verfahren **[**1**]**). Das Beispiel einer Hardwarelösung ist derzeit der sog. Assoziativspeicher oder CAM(CAM = Content Adressable Memory).

Die genaue Funktionsweise und der Aufbau des assziativen Speichers ist in **[**2**]** beschrieben. Der Grundbedanke basiert darauf, den zu suchenden Schlüssel in jedem einzelnen Speicherwort des CAM zu suchen und zu vergleichen. Es werden all jene Speicherworte, welche Schlüssel an der passenden Position enthalten, durch sog. Detektorelemente mit Inhalt "1" (Treffer) markiert. Ein solcher vollassoziativer Speicher hat den Nachteil, daß die einzelnen Speicherzellen durch die eingebaute Vergleicherschaltung sehr aufwendig und damit verhältnismäßig groß sind und daß die Anzahl der herauszuführenden Pins für einen integrierten Schaltkreis hoch ist **[**2**]**. Dies hat zur Folge, daß die Anzahl der Speicherelemente in käuflichen CAMs auch heute noch relativ gering ist (z.B. 1024 32-Bit-Worte), was dem Trend zu eher größer werdenden Tabellen vor allem in der Kommunikationstechnik (bedingt durch die immer umfangreicher werdenden Kommunikationsnetze und Leistungsanforderungen) nicht gerecht wird.

Eine gewisse Abhilfe bezüglich der Anzahl an Speicherelementen läßt sich durch sog. teilassoziative Speicher erreichen, bei denen der Vergleich des Schlüssels nicht mehr parallel in jedem Speicherwort stattfindet, sondern serialisiert wird **[**2**]**. Auf diese Weise läßt es sich vermeiden, jede Speicherzelle mit einer Vergleicherschaltung ausstatten zu müssen, wodurch die Chipgröße deutlich reduziert werden kann.

Auch beim teilassoziativen Speicher nach herkömmlicher Technik basiert die Suchstrategie jedoch darauf, den entsprechenden Teilinhalt jedes einzelnen Speicherwortes mit dem Suchschlüssel zu vergleichen, um die assoziierte Information zu finden. Dies führt beim teilassoziativen Speicher zu relativ langen Suchzeiten.

In vielen Anwendungen, speziell den meisten Tabellensuchen, welche im Rahmen von Kommunikationsanwendungen benötigt werden, tritt der Fall, daß zu einem Schlüssel mehrere Treffer vorhanden sein können, nicht auf. In diesem Zusammenhang ist es viel wichtiger, daß mit einer Suche möglichst viele Speicherzellen angesprochen werden können. Aus diesem Grund ist der klassische (Teil-) Assoziativspeicher an diese Aufgabe nicht angepaßt. Dennoch werden schnellste Tabellenzugriffe speziell in der Kommunikationstechnik mit ihrem Trend zur Gigabit- und Terabitverarbeitung immer wichtiger.

Die der Erfindung zugrundeliegende Aufgabe besteht darin, eine Datenspeicheranordnung und ein Verfahren zu deren Betrieb anzugeben, mit dem über Schlüssel erfolgende Zugriffe auf assoziierte Daten beschleunigt werden.

Diese Aufgabe wird gemäß den Merkmalen des Anspruchs 1 oder 5 gelöst.

Alle übrigen Weiterbildungen der Erfindung ergeben sich aus den Unteransprüchen.

Ein besonderer Vorteil der erfindungsgemäßen Anordnung besteht darin, daß die interne Adreß- und Datenbuswortbreite frei wählbar ist. Dadurch wird ein sehr effizienter Datenzugriff ermöglicht. Günstig kann es in diesem Zusammenhang auch sein, den Adreßgenerator frei programmierbar zu machen, sodaß je nach Bedarf eine unterschiedliche Hashfunktion für die Adreßgenerierung eingestellt werden kann.

Weiterhin kann es vorteilhaft sein, eine Datentorlogik vorzusehen, welche in Abhängigkeit eines Steuersignales Schreib- und Lesevorgänge aus dem Speicher bzw. in den Speicher steuert. Mit dem Pufferspeicher innerhalb dieser Datentorlogik ist es möglich Speicherinhalte für einen Vergleich mit am Bus anliegenden Daten bereitzuhalten.

Weiterhin kann es vorteilhaft sein, eine Zustandslogik vorzusehen, welche mit Hilfe eines Steuersignals aus einem ankommenden Datenstrom die Schlüsselinformation aussortiert und in einem Speicher bereithält.

Weiterhin ist es günstig, in der Zustandslogik auch die Kollisionsbehandlung durchzuführen, da dort die ankommenden Daten zwischengespeichert werden. So ist ein leichter Vergleich möglich. Im Anschluß kann dann ein neuer Schlüssel einfach nach einem bekannten Überlaufverfahren, wie beispielsweise in **[**1**]** beschrieben, errechnet werden.

Besonders günstig ist ein Verfahren zum Betrieb der Datenspeicheranordnung, welches als Hash-Verfahren eine Polynomdivision durch ein Generatorpolynom durchführt. Diese Verfahren sind als CRC-Berechnungsverfahren bekannt. Sie werden beispielsweise bei der Zuordnung von Fehlern zu Fehlersignaturen im Testbereich eingesetzt und gewährleisten eine hohe Trefferquote in Verbindung mit geringen Kollisionen.

Besonders günstig ist es bei der Anwendung dieses Verfahrens von Polynomdivisionen bestimmte Ergebnisse zwischenzuspeichern, da so der Rechenvorgang weiter beschleunigt werden kann und die Menge der Zwischenergebnisse überschaubar ist.

Im folgenden wird die Erfindung anhand von Figuren und Beispielen weiter erläutert.

Figur 1 zeigt ein Beispiel einer erfindungsgemäßen Speicheranordnung.

Die Figuren 2 bis 4 zeigen ein beispielhaftes Betriebsverfahren einer erfindungsgemäßen Speicheranordnung für den Schreibbetrieb.

Die Figuren 5 bis 7 zeigen ein beispielhaftes Betriebsverfahren einer erfindungsgemäßen Speicheranordnung für den Lesebetrieb.

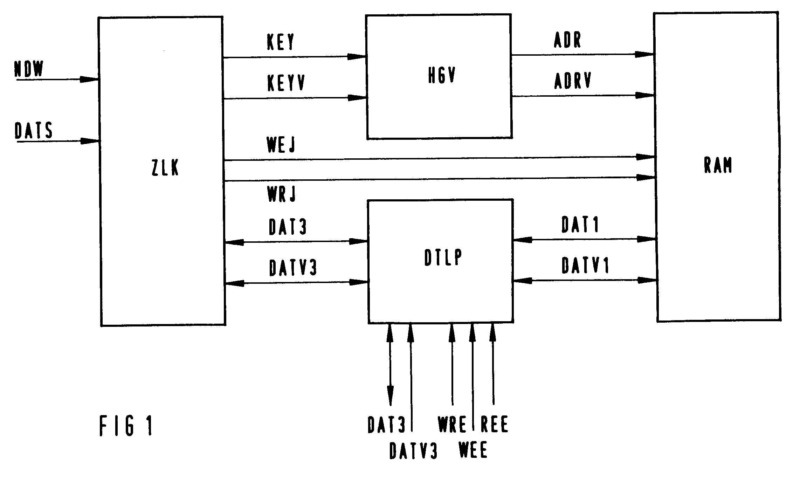

In Figur 1 ist eine beispielhafte Speicheranordnung, wie sie die Erfindung vorsieht, dargestellt. Sie besteht aus einer Datentorlogik mit Zugriffspuffer DTLP, einer Zustandslogik mit Kollisionsauflösung ZLK, einem Hash-Generator HGV und einem Speicher mit adressierbarem Speicherfeld RAM. Weiter sind dargestellt die einzelnen Signale, über welche die unterschiedlichen Bestandteile der Anordnung miteinander kommunizieren, bzw. über welche sie mit Daten versorgt werden.

Beispielsweise werden der Datentorlogik mit Zugriffspuffer ein Datenbus DAT3, Signale DATV3, WRE, WEE und REE zugeführt. Über den Datenbus DAT3 werden die abzuspeichernden Daten an der Datentorlogik mit Zugriffspuffer angelegt. Mittels DATV3 wird angezeigt, daß die Daten anliegen und über WRE wird von Lese - in Schreibbetrieb umgeschaltet. Mittels REE bzw. WEE wird extern read bzw. write ermöglicht. Die an der Datentorlogik mit Pufferspeicher DTLP anliegenden Daten werden zur Zustandslogik mit Kollisionsauflösung über DAT3 bzw. DATV3 durchgeschleift und dort zwischengespeichert. Die Signale NDW und DATS, die ZLK zugeführt werden, steuern mit DATS welcher Bestandteil des ankommenden Datenwortes den Schlüssel enthalt. Das Signal NDW steuert die Anzahl der Datenworte, welche pro Speichereinheit abgespeichert werden soll. Falls von ZLK über DATS und NDW ein Schlüssel in den ankommenden Daten identifiziert wurde, so wird er an HGV den Hash-Generator über key angelegt und es wird über key valid "KEYV" angezeigt, daß die Schlüsseldaten nun abgerufen werden können. Der Hash-Generator HGV berechnet nun aus dem Schlüssel eine Adresse und legt diese über ADR an den Speicher an. Mit Adreß-Valid ADRV zeigt er dem Speicher RAM, daß die Adresse nun gültig ist. Über WRI wird nun der Speicher RAM auf Lesebetrieb geschaltet und mittels der Datenleitung DAT1 und DATV1 wird der Inhalt, der unter der angelegten Adresse im Speicher steht, durch die Datentorlogik mit Pufferspeicher DTLP weiter über DAT3 und DATV3 in die Zustandslogik mit Kollisionsbehandlung eingelesen. Die Zustandslogik mit Kollisionsbehandlung überprüft nun, ob die ausgelesenen Daten aus dem Speicher, als leer, gelöscht, oder belegt gekennzeichnet sind.

Falls die Daten als belegt gekennzeichnet sind, berechnet sie aufgrund eines bekannten Überlaufverfahrens einen neuen Schlüssel. Falls der Speicher als gelöscht oder leer gekennzeichnet ist, veranlaßt sie über WEI und WRI, daß der Speicher auf Schreibbetrieb und Schreiben umgeschaltet wird, und über DAT3 DATV3 und DAT1 und DATV1 in Verbindung mit der Datentorlogik und Puffer wird das von außen angekommene Wort, oder auch mehrere Worte im Speicher, unter der entsprechenden Adresse abgelegt. DATV1 und DATV3 signalisieren nicht nur die Gültigkeit der Daten, sondern geben DTLP auch jeweils die Richtung des Datenflusses an.In ZLK kann beim Auslesen aus RAM überprüft werden, ob unter der auszulesenden Adresse der anliegende Schlüssel abgespeichert ist. Ist dies der Fall, so können die adressierten Daten von ZLK über DTLP an den Bus DAT3 angelegt werden. Ist dies nicht der Fall, so muß eine Kollisionsbehandlung durchgeführt werden. Der Lese- und Schreibbetrieb wird in den nachfolgenden Figuren noch weiter erläutert.

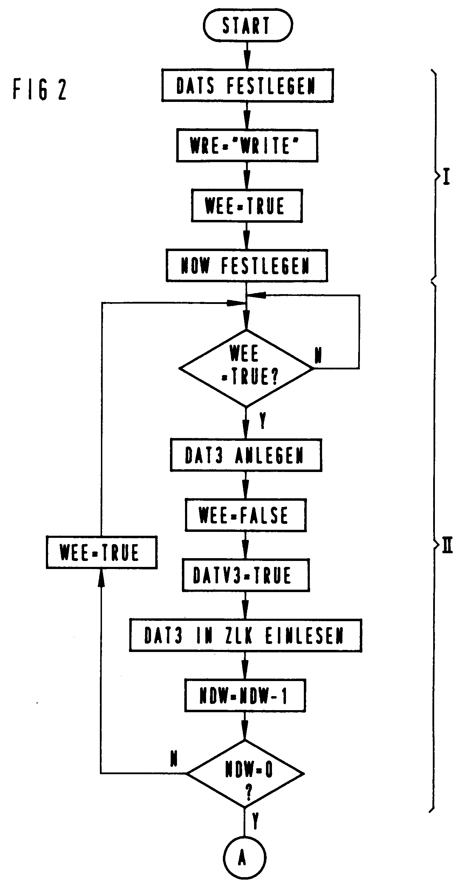

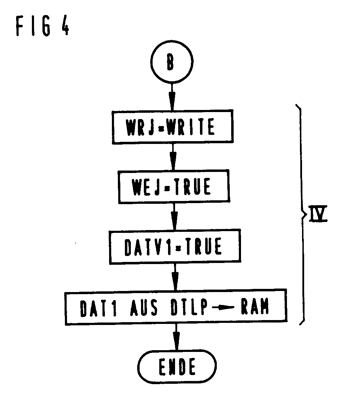

Die Figuren 2 bis 5 zeigen ein Betriebsverfahren zum Einschreiben in eine erfindungsgemäße Speicheranordnung. Das Betriebsverfahren ist in Form eines Ablaufdiagrammes dargestellt. Die zusammengefaßten Bereiche I, II, III und IV kennzeichnen unterschiedliche Abschnitte im Verfahren. Mit I wird der Initialisierungsvorgang bezeichnet, mit II der Einlesevorgang in die Zustandslogik mit Kollisionsauflösung. Mit III wird der Validierungsvorgang bezeichnet und mit IV der eigentliche Schreibvorgang.

Beim Initialisieren I wird zunächst DATS festgelegt. Damit wird angezeigt, in welchen Datenworten des ankommenden Datenstromes sich der Schlüssel befindet und an welcher Position er sich befindet. Anschließend wird WRE das externe Read/Write-Signal auf write geschaltet und write enable extern WRE auf "true" gesetzt. Nun ist es noch erforderlich, die Anzahl der Datenworte NDW vorzugeben, die pro Speichervorgang eingelesen werden soll.

Im Abschnitt II werden die auf DAT3 ankommenden Daten in die Zustandslogik mit Kollisionsbehandlung eingelesen. Zunächst wird überprüft, ob das externe write enable WEE gesetzt ist. Anschließend werden über den Datenbus DAT3 ankommende Daten angelegt und um ein weiteres Einschreiben zu verhindern, wird das externe write enable WEE auf "false" gesetzt. Anschließend wird der Zustandslogik mit Kollisionsbehandlung ZLK mitgeteilt, daß die Daten nun zur Verfügung stehen, d.h. DATV3 wird "true" gesetzt. Nun wird DAT3 in ZLK eingelesen und zwar solange bis NDW gleich 0 ist.

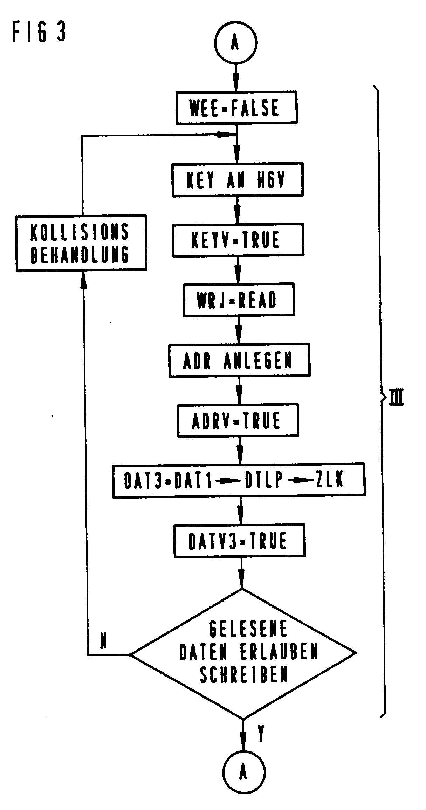

Im Abschnitt III von Figur 3 wird nun aus den an der Zustandslogik mit Kollisionsbehandlung ZLK anstehenden Daten der Schlüssel berechnet und an die Hash-Einheit HGV angelegt. Der Ablauf ist aus der Figur ersichtlich. Weiterhin wird wie bereits in Figur 1 ausgeführt, überprüft, welchen Zustand der unter der Adresse stehende Speicherinhalt hat. Ob der Speicher beschrieben werden darf, ob er gelöscht ist, oder ob die Daten geschützt sind. Falls die Daten geschützt sind, wird eine Kollisionsbehandlung durchgeführt, falls sie nicht geschützt sind, folgt Abschnitt IV und es wird wie in der Figur dargestellt, Schreiben in den Speicherbereich RAM durchgeführt.

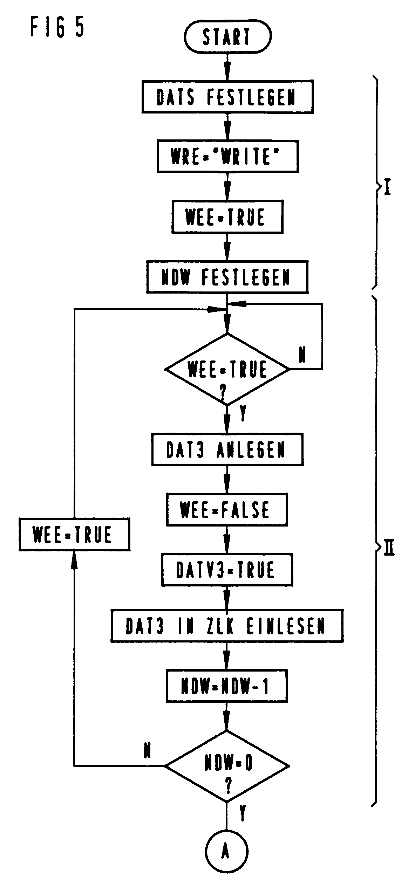

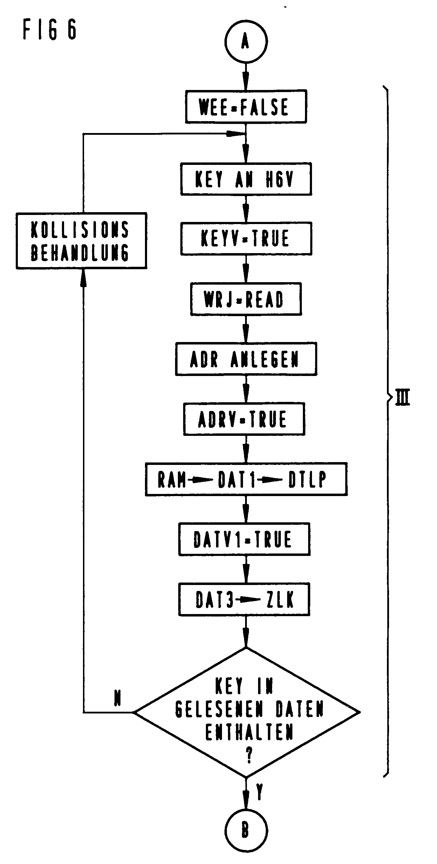

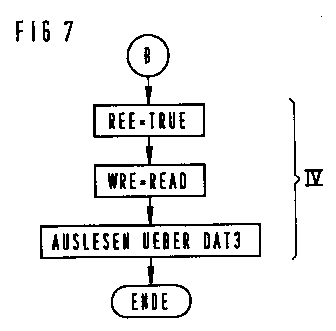

In den Figuren 5 bis 7 ist ein beispielhaftes Betriebsverfahren für den Lesevorgang der erfindungsgemäßen Speicheranordnung dargestellt. Es unterscheidet sich von dem Schreibvorgang nur durch die mit III und IV gekennzeichneten Bereiche. Im wesentlichen ist zu bemerken, daß nun die aus dem Speicher RAM ausgelesenen Daten daraufhin überprüft werden, ob
sie den Schlüssel key enthalten. Falls sie den Schlüssel enthalten, folgt Abschnitt IV und die Daten werden ausgelesen. Falls der Schlüssel nicht enthalten ist, erfolgt eine Kollisionsbehandlung.

### Literatur

1) Ollmert, H.J., Datenstrukturen und Datenorganisationen, Oldenbourg, 1989, S. 133 - 162
2) Hilberg, W., "Digitale Speicher 1", Oldenbourg, 1987
3) Ramabadran, T.V. and Gaitonde S.S., "A Tuorial on CRC Computations" IEEE Micro, August 1988, pp. 62 - 71

### Bezugszeichenliste

- ADR: Speicheradresse
- ADRV: Speicheradresse Valid
- DTLP: Datentorlogik mit Zugriffspuffer
- DAT1: Datenbus 1 zwischen RAM und DTLP
- DATV1: Datenbus 1 Valid
- DATS: Zähler für Schlüssel in Datenwort
- DAT3: Datenbus 3 zwischen DTLP und ZLK sowie nach außen
- DATV3: Datenbus 3 Valid
- HGV: Hash-Generator
- KEY: Schlüssel
- KEYV: Schlüssel-Valid
- NDW: Anzahl der abzuspeichernden Datenworte
- REE: Read Enable Extern
- WRE: Read/Write Extern
- WEE: Write Enable Extern
- WEI: Write Enable Intern
- WRI: Read/Write Intern
- RAM: Random Acess Memory
- ZLK: Zustandslogik mit Kollisionsauflösung

## Patentansprüche

1. Monolithisch integrierte Datenspeicheranordnung,
a) bei der in mindestens einem Speicher mindestens ein adressierbares Speicherfeld (RAM) zur Aufnahme von abzuspeichernden Daten vorgesehen ist und
b) bei der mindestens ein Adreßgenerator (HGV) vorgesehen ist, welcher aus abzuspeichernden Daten durch Anwendung einer Hash-Funktion auf mindestens einen Teil der abzuspeichernden Daten, mindestens eine Adresse (ADR) zur Adressierung des Speicherfeldes erzeugt.

2. Datenspeicheranordnung nach Anspruch 1, bei der mindestens eine Datentorlogik (DTLP) vorgesehen ist, welche in Abhängigkeit von mindestens einem Steuersignal (DATV1, REE, WRE) bei Schreib- und Lese-Vorgängen den Zugriff auf den Speicher steuert, indem sie entweder an einen Bus (DAT3) anliegende Daten einliest, oder am Speicher anliegende Daten (DAT1) ausliest.

3. Datenspeicheranordnung nach einem der Ansprüche 1 bis 2, bei der mindestens eine Zustandslogik (ZLK) vorgesehen ist, welche in Abhängigkeit von mindestens einem Steuersignal (NDW) eine von der Datentorlogik zu behandelnde Datenwortlänge steuert.

4. Datenspeicheranordnung nach Anspruch 3, bei der von der Zustandslogik bei einer Adreßkollision eine neue Adresse generiert wird, indem ein Überlaufverfahren angewendet wird.

5. Verfahren zum Betrieb einer Datenspeicheranordnung nach einem der Ansprüche 1 bis 4, bei dem als Hash-Verfahren eine Polynomdivision durch ein Generatorpolynom, eine sog. CRC-Berechnung zur Anwendung kommt.

6. Verfahren nach Anspruch 5, bei dem zur Verkürzung einer Rechenzeit, bei der Berechnung der Polynomdivision mindestens ein zuvor abgespeichertes Zwischenergebnis von Polynomdivisionen verwendet wird.
